# EUROPEAN PATENT APPLICATION

(11) **EP 1 320 044 A2**
(43) Date of publication of application: **18.06.2003**
(21) Application number: 02258282.9
(22) Date of filing: 02.12.2002
(51) Int. Cl.: G06F 17/30

(54) **Web-based personal data mining**

(30) Priority: 14.12.2001 US 14469
(71) Applicant: NCR International, Inc., Dayton, Ohio 45479 (US)
(72) Inventor: Lin, Horng-Jann, Lawrenceville, Georgia 30043 (US); Cogswell, Thomas Leroy, Lawrenceville, Georgia 30045 (US)
(74) Representative: Williamson, Brian

(57) **Abstract**

A computer-implemented method of performing data mining on an individual basis is described. The method includes monitoring an individual's use patterns and creating an individual data profile based on analysis of the monitoring operation. Tasks are then automatically performed in accordance with an individual's request and based on the individual data profile.

## Description

The present invention relates to a method of and apparatus for data mining; and more particularly, to such a method and apparatus for data mining use on the Web. Still more particularly, the present invention relates to a method of and apparatus for a personal data mining application working as a data mining agent for an individual.

Data mining, and more particularly, data mining of web based information, is an important application used by businesses to uncover purchasing trends and enable them to focus advertising to select individuals. Frequently, data mining is offered hand in hand with data warehousing services. In this fashion, the business focuses on storing information about consumers in a data warehouse and then employing data mining tools to analyze the data and extract useful information.

Analyzing and determining a consumer's purchasing habits from the perspective of a business selling goods to the consumer is known in the art. Data mining involves sifting through large amounts of data to uncover patterns and relationships contained within the business activity and history. Data mining can be done manually by partitioning and sorting the data until a pattern becomes obvious. Or, it can be done with programs for automatically analyzing the data.

One such example is described in U.S. patent 5,991,735 (hereafter referred to as the '735 patent) to Gerace. However, the system described in the '735 patent is directed to enabling a business to gather information regarding a consumer's purchasing habits. There is a need in the art for a system for use by an individual to gather information regarding the individual's purchasing habits.

As a further example consider the system described in U.S. patent 6,088,731 (hereafter referred to as the '731 patent) to Kiraly et. al. The system of the '731 patent is directed to a business using an intelligent assistant to provide information from web sites selected by a user to sell products to the user. That is, the assistant is an additional centralized sales tool for use by the business. The focus is not on the needs or desires of the user.

Furthermore, once the business determines a consumer's purchasing habits, the business is interested in using the information to determine how best to sell to the consumer. There is a need in the art for a system for use by an individual that can take into account a consumer's purchasing habits and automatically perform future purchases.

It is therefore an object of the present invention to provide a system for use by an individual to gather information regarding the individual's purchasing habits.

Another object of the present invention is to provide a system for use by an individual that can take into account a consumer's purchasing habits and automatically perform future purchases.

The above described objects are fulfilled by a computer-implemented method of performing data mining on an individual basis. The method includes monitoring an individual's use patterns and creating an individual data profile based on analysis of the monitoring operation. Tasks are then automatically performed in accordance with an individual's request and based on the individual data profile.

Still other objects and advantages of the present invention will become readily apparent to those skilled in the art from the following detailed description, wherein the preferred embodiments of the invention are shown and described, simply by way of illustration of the best mode contemplated of carrying out the invention. As will be realized, the invention is capable of other and different embodiments, and its several details are capable of modifications in various obvious respects, all without departing from the invention. Accordingly, the drawings and description thereof are to be regarded as illustrative in nature, and not as restrictive.

The present invention is illustrated by way of example, and not by limitation, in the figures of the accompanying drawings, wherein elements having the same reference numeral designations represent like elements throughout and wherein:
Figure 1 is a high level block diagram of an embodiment of the present invention;
Figure 2 is a portion of an example individual profile data table as used in an embodiment of the present invention;
Figure 3 is a functional flow diagram of the operation of a controller as used in an embodiment of the present invention; and
Figure 4 is a high level block diagram of a computer system for use with an embodiment of the present invention.

A method and apparatus for a personal web mining application are described. In the following description, for purposes of explanation, numerous specific details are set forth in order to provide a thorough understanding of the present invention. It will be apparent; however, that the present invention may be practiced without these specific details. In other instances, well-known structures and devices are shown in block diagram form in order to avoid unnecessarily obscuring the present invention.

### Top level description

The present invention is a personal web mining application, referred to as the web butler, that works as an enhanced data mining agent for an individual.

### Detailed description

The web butler includes web mining functionality and is attached to an individual's web browser. As the individual browses the web and makes purchases, the web mining application learns the individuals web usage patterns, e.g. web sites browsed, web sites where purchases are made, and items purchased. As the web butler analyzes and learns the individual's habits on the web, it starts offering services increasing productivity for the individual, e.g. handling travel plans, purchasing groceries, and paying bills.

### Functional overview

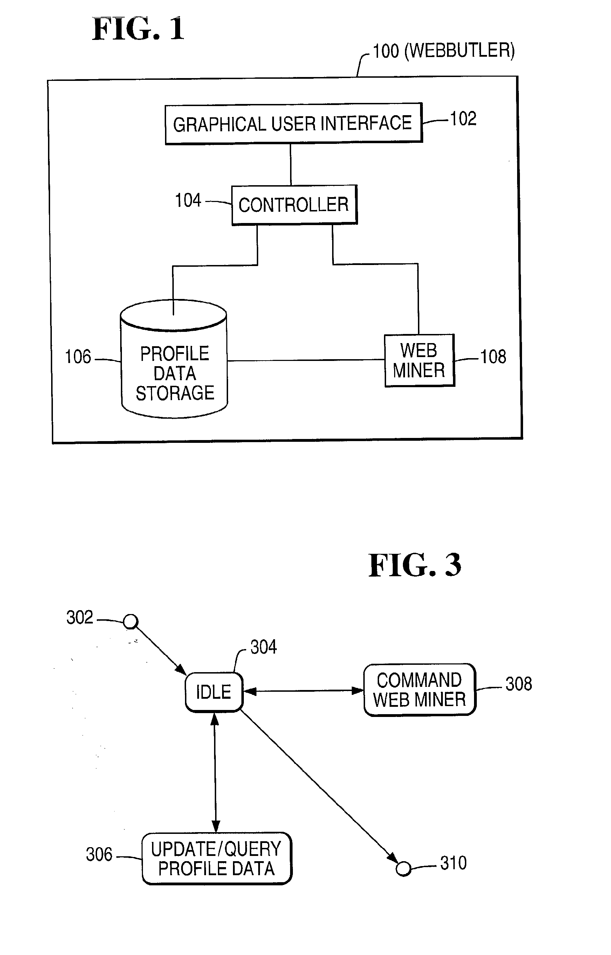

A web butler 100 is now described with reference to Figure 1 in which a top level functional block diagram of the web butler 100 is illustrated. Web butler 100 includes a graphical user interface (GUI) 102 for interacting with the individual or user, a controller 104 for responding to user input and managing operation of the web butler 100, a profile data storage 106 for storing the individual's profile data, and a web miner 108 for performing personal data mining.

GUI 102 is the mechanism by which the user controls or interacts with the web butler 100. GUI 102 receives commands from the user and provides feedback indicating the status of command execution by web butler 100 to the user. GUI 102, in turn, is the front end for controller 104.

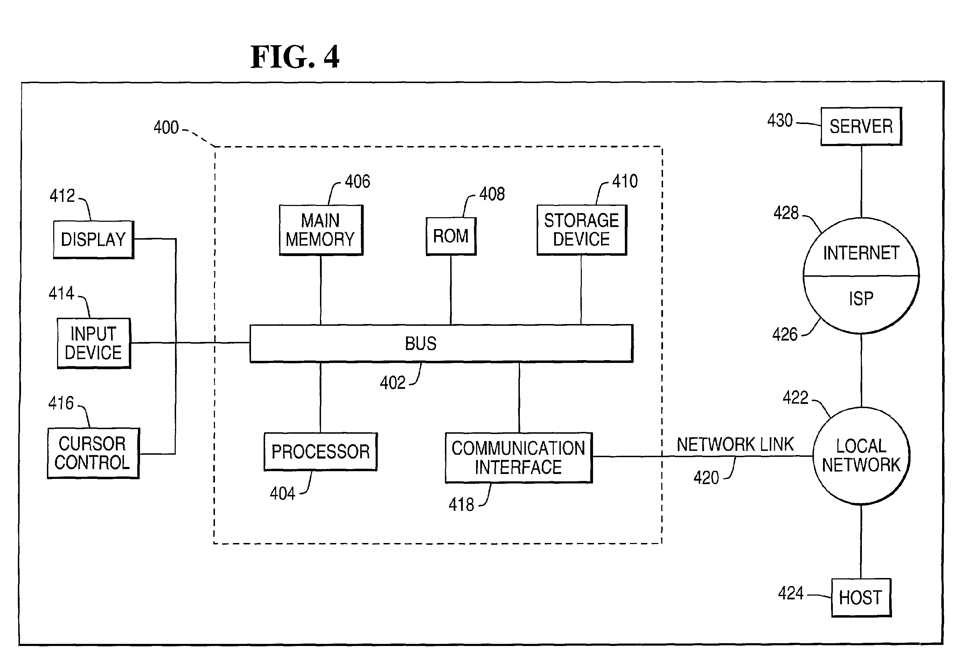

Controller 104 receives and executes commands from GUI 102 and provides responses to GUI 102 for presentation to the user as feedback, e.g., updating an account value display or adding items to a shopping list display. Controller 104 also interacts with the profile data storage 106 and web miner 108. The operation of controller 104 is described in more detail below in conjunction with Figure 3.

Controller 104 interacts with profile data storage 106 to add, modify, and delete the individual's data profile and other information, e.g., user preferences, browsing history, shopping lists, shopping schedule. The controller 104 via GUI 102 enables the user to view and manipulate the data stored in profile data storage 106.

Controller 104 also interacts with web miner 108 to control the personal web mining functionality and receive results from data mining runs. The web miner 108 is data mining software, as is known in the art when applied to data collected by businesses and analyzed to discover trends or patterns in many individual's buying habits, for exploring detailed business transactions and usage and browsing habits of the individual. In this sense, the present invention is turning the typical application of data mining technology on its head, i.e., data mining is being performed by and for the individual's benefit instead of by a business for the benefit of the business.

Controller 104 interacts with web miner 108 providing commands, based on input received from the user via GUI 102, to control execution of web miner 108. For example, the user may manipulate GUI 102 to command controller 104 to control web miner 108 to automatically monitor and "mine" the user's browsing habits and determine the individual's data profile, e.g., the web sites at which the user visits most often and the web sites at which the user spends the most money, and the web site at which the user spends the most time.

In response, the controller 104 receives the results of the web miner's 108 execution, either directly as feedback from the web miner 108 or indirectly by accessing a portion of profile data storage 106 storing the results. Controller 104 then provides the results to the user via GUI 102.

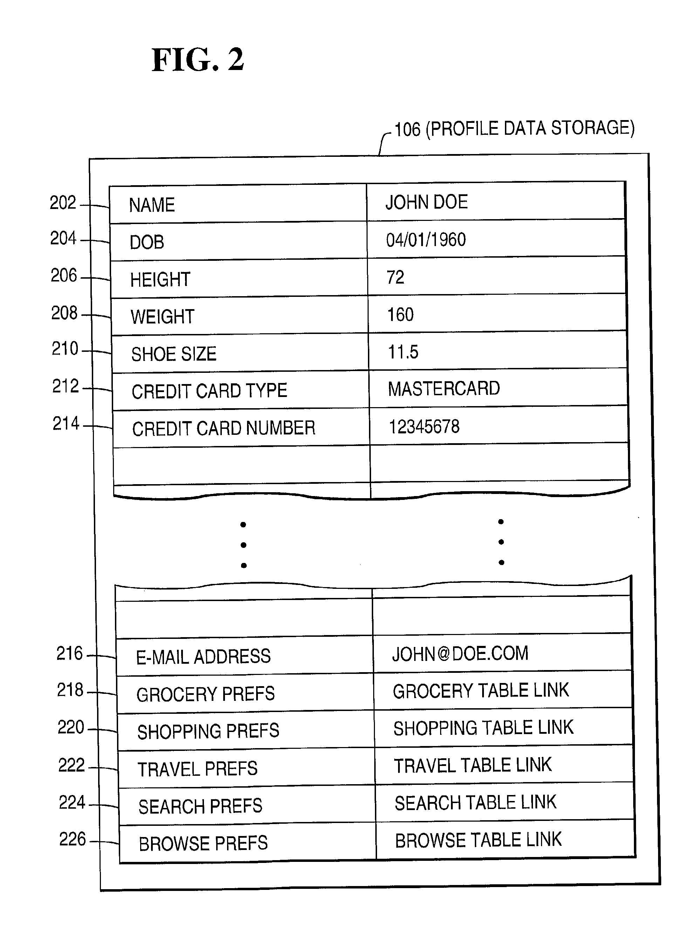

Turning now to the profile data storage 106, the data storage is a database for storing the individual's profile data and other pertinent information produced and consumed by the components of the web butler 100. Figure 2 is a diagram of a portion of a table in the database of profile data storage 106. There are numerous fields in the table; however, for simplification only a select few are identified and discussed herein. It is to be understood that there are many different ways profile data storage can be implemented and the one illustrated and described here is as an example and is not intended to limit the embodiment of the present invention.

Data storage 106 includes a name field 202 having an associated data value entry of "John Doe", the name of the individual using the web butler 100. A date of birth field (DOB) 204 stores the date of birth of the individual and a height 206, weight 208, and shoe size 210 field each store physical characteristics of the individual. Height 206, weight 208, and shoe size 210 values can be used in shopping for clothing to preselect or select a good fit. Additional physical characteristics fields can include shirt collar, sleeve length, inseam, hem style, and other clothing measurements and preferences.

For payment processing, the profile data storage 106 includes fields storing financial information, such as a credit card type field 212 and a credit card field 214. Additional payment fields can include bank account information, online bill paying information, and other financial account information.

An electonic mail (e-mail) address field 216 is included for contact purposes. Links to additional specific preference tables are provided, e.g., grocery prefs 218, shopping prefs 220, travel prefs 222, search prefs 224, and browse prefs 226. Grocery preferences linked to by the grocery prefs field 218 includes such information as which stores are preferred, whether delivery or pickup is preferred, and payment type preferences of the individual. Shopping preferences linked to by the shopping prefs field 220 includes such information as which stores are preferred, whether delivery or pickup is preferred, and payment type preferences of the individual. Travel preferences linked to by the travel prefs field 222 includes such information as which airlines are preferred, frequent flyer numbers, seating location and service level preferences (e.g., first class, business class, coach), and meal preferences of the individual. Search preferences linked to by the search prefs field 224 includes such information as which web search engine is preferred by the individual. Browse preferences linked to by the browse prefs field 226 includes such information as which browser is preferred, which information, reviews, and news sites are preferred by the individual.

Profile data storage 106 also includes data mining preferences and information results from data mining operations for access by controller 104.

Web miner 108 may be a typical data mining application, as described above, or may be a slimmed down version with a more limited feature set directed to the needs of an individual as opposed to a business. For instance, the web miner 108 is more interested in determining and analyzing the shopping and purchasing habits of an individual as opposed to the profitability and desirability of attracting certain customer types. Typical data mining applications include travel planning, grocery shopping and bill paying.

The web miner 108 responds to commands received from controller 104 to monitor the individual's browsing and shopping habits. For example, the controller 104 may command the web miner 108 to monitor purchases made at a web-based grocery store to compile a list of items typically purchased from a particular store. After analysis, the web miner 108 can respond to the controller 104 with a list of items and their corresponding date of purchase. Based on this information, the controller 104 may be able to suggest an automatic shopping schedule to the user. If the user agrees, the schedule and shopping list may be specified and stored in profile data storage 106 for future scheduled shopping.

The operation of controller 104 is now described with reference to Figure 3. The flow of control of the operation of controller 104 is shown in the high-level block diagram of Figure 3. The control flow begins at start step 302 and transitions to an idle state at step 304 after performing startup functions, e.g., reading and setting individual user preferences obtained from profile data storage 106.

In step 304, controller 104 awaits commands from the user via GUI 102. Upon receipt of a command requiring interaction with web miner 108, the flow of control proceeds to step 308 wherein the controller 104 controls the web miner. The interaction may require obtaining results from data mining operations, specifying data mining operations to be performed, resetting the web miner or other web miner manipulations. After commanding the web miner 108, the flow of control proceeds back to step 304.

Upon receipt of a command requiring access of the profile data storage 106, the flow of control proceeds to step 306 wherein the controller 104 accesses and/or manipulates the data. During step 306, controller 104 reads and/or writes data from profile data storage 106, e.g., adding new data fields, updating existing data, deleting existing data fields. For example, the user may decide to change a credit card used to make payments and the information needs to be updated. Also, during step 306, controller 104 is able to access data mining results for presentation to the user via GUI 102. After updating or querying the profile data storage contents, the flow of control returns to step 304.

Upon receiving a termination command to stop execution of controller 104, the flow of control proceeds to step 310 and performs cleanup operations to shutdown the web butler. An example hardware platform for executing the web butler 100 is now described.

### Hardware overview

Figure 4 is a block diagram illustrating an exemplary computer system 400 upon which an embodiment of the invention may be implemented. The present invention is usable with currently available personal computers, mini-mainframes, enterprise servers, multiprocessor computers and the like.

Computer system 400 includes a bus 402 or other communication mechanism for communicating information, and a processor 404 coupled with the bus 402 for processing information. Computer system 400 also includes a main memory 406, such as a random access memory (RAM) or other dynamic storage device, coupled to the bus 402 for storing information and instructions to be executed by processor 404. Main memory 406 also may be used for storing temporary variables or other intermediate information during execution of instructions to be executed by processor 404. Computer system 400 further includes a read only memory (ROM) 408 or other static storage device coupled to the bus 402 for storing static information and instructions for the processor 404. A storage device 410, such as a magnetic disk or optical disk, is provided and coupled to the bus 402 for storing information and instructions.

Computer system 400 may be coupled via the bus 402 to a display 412, such as a cathode ray tube (CRT) or a flat panel display, for displaying information to a computer user including GUI 102. An input device 414, including alphanumeric and other keys, is coupled to the bus 402 for communicating information and command selections to the processor 404. Another type of user input device is cursor control 416, such as a mouse, a trackball, or cursor direction keys for communicating direction information and command selections to processor 404 and for controlling cursor movement on the display 412. This input device typically has two degrees of freedom in two axes, a first axis (e.g., x) and a second axis (e.g., y) allowing the device to specify positions in a plane.

The invention is related to the use of a computer system 400, such as the illustrated system, to perform data mining on an individual basis. According to one embodiment of the invention, a method of performing personal data mining is provided by computer system 400 in response to processor 404 executing sequences of instructions contained in main memory 406. Such instructions may be read into main memory 406 from another computer-readable medium, such as storage device 410. However, the computer-readable medium is not limited to devices such as storage device 410.

For example, the computer-readable medium may include a floppy disk, a flexible disk, hard disk, magnetic tape, or any other magnetic medium, a CD-ROM, any other optical medium, punch cards, paper tape, any other physical medium with patterns of holes, a RAM, a PROM, an EPROM, a FLASH-EPROM, any other memory chip or cartridge, a carrier wave embodied in an electrical, electromagnetic, infrared, or optical signal, or any other medium from which a computer can read. Execution of the sequences of instructions contained in the main memory 406 causes the processor 404 to perform the process steps described below. In alternative embodiments, hard-wired circuitry may be used in place of or in combination with computer software instructions to implement the invention. Thus, embodiments of the invention are not limited to any specific combination of hardware circuitry and software.

Computer system 400 also includes a communication interface 418 coupled to the bus 402. Communication interface 418 provides a two-way data communication as is known. For example, communication interface 418 may be an integrated services digital network (ISDN) card, a digital subscriber line (DSL), or a modem to provide a data communication connection to a corresponding type of telephone line. As another example, communication interface 418 may be a local area network (LAN) card to provide a data communication connection to a compatible LAN. Wireless links may also be implemented. In any such implementation, communication interface 418 sends and receives electrical, electromagnetic or optical signals which carry digital data streams representing various types of information. Of particular note, the communications through interface 418 may permit transmission or receipt of the web butler and monitoring of the individual's web use. For example, two or more computer systems 400 may be networked together in a conventional manner with each using the communication interface 418.

Network link 420 typically provides data communication through one or more networks to other data devices. For example, network link 420 may provide a connection through local network 422 to a host computer 424 or to data equipment operated by an Internet Service Provider (ISP) 426. ISP 426 in turn provides data communication services through the world wide packet data communication services through the world wide packet data communication network now commonly referred to as the "Internet" 428. Local network 422 and Internet 428 both use electrical, electromagnetic or optical signals which carry digital data streams. The signals through the various networks and the signals on network link 420 and through communication interface 418, which carry the digital data to and from computer system 400, are exemplary forms of carrier waves transporting the information.

Computer system 400 can send messages and receive data, including program code, through the network(s), network link 420 and communication interface 418. In the Internet example, a server 430 might transmit a requested code for an application program through Internet 428, ISP 426, local network 422 and communication interface 418. In accordance with the invention, one such downloaded application provides for a method of performing data mining on an individual basis, as described herein.

The received code may be executed by processor 404 as it is received, and/or stored in storage device 410, or other non-volatile storage for later execution. In this manner, computer system 400 may obtain application code in the form of a carrier wave.

### Examples

A few examples are illustrative of the execution and use of the web butler by an individual. There are many other possible uses of the web butler than the examples provided below. These examples are for illustration purposes only and are not intended to be viewed as limiting.

### Travel planning

With respect to travel planning, the web butler could be asked to locate an airline ticket for travel to Atlanta, Georgia from Newark, New Jersey departing February 18th, 2001. The individuals web butler will search the web using the individuals data profile, i.e. the individual's history, locations, spending habits . The individual's profile will be used to identify a best fit based on the individual's personal preferences regarding such specifics as airline, seat location, schedule, and fare. Once the best fit is found, the web butler would then notify the individual of the selections and request a response such as purchase a ticket, continue the search, or delete the request.

### Grocery shopping

In an alternate embodiment, the web butler would be given a preset spending limit. The web butler would be able to use a spending account up to the present spending limit to perform daily, weekly, or monthly chores. For example, basic grocery shopping chores can be accomplished by the web butler based on the individuals data profile. The individual can place an order with the web butler for coffee, two steaks, asparagus, green beans, broccoli, and three pears. Using the individuals shopping profile, the web butler will look for a can of Folgers aroma roasted 16 oz coffee (based on the individual's previous purchases of this type of item 3 of 4 prior times) having a price under $5, two 16 oz T-bone steaks, with a price of no more than $18 each, 1 lb. of green asparagus, an 8 oz bag of green beans, cut broccoli, and three red pears. The web butler will go to the locations the individual frequently shops at and search for products matching the individual's profile and pay for them. If decisions are to be made which the web butler cannot determine how the individual would decide, the web butler will contact individual for the decision. For example, if the coffee comes in either a can or a vacuum sealed pouch, the web butler , without further individual profile data with which to differentiate, will contact individual for a decision.

### Bill paying

In addition to shopping and making purchases, the web butler can also assist in bill paying. The individuals data profile will identify when they normally pay bills. If the web butler determines that a payment has not been made at the typical time, the web butler will notify the individual of the discrepancy and request a response. If a regular scheduled bill is approaching an overdue status, the web butler can automatically contact the payees system and arrange to send a payment according to the individuals payment history. If the individual pays a bill but inadvertently enters an incorrect amount, the web butler notifies the individual of the deviation from the correct amount.

For security purposes, the web butler only contains needed personal data when traveling on the web, e.g. passwords to sites that it is visiting or a store ID at which the individual always shops. The web butler is able to check web site reliability prior to entering.

It will be readily seen by one of ordinary skill in the art that the present invention fulfills all of the objects set forth above. After reading the foregoing specification, one of ordinary skill will be able to affect various changes, substitutions of equivalents and various other aspects of the invention as broadly disclosed herein. It is therefore intended that the protection granted hereon be limited only by the definition contained in the appended claims and equivalents thereof.

For example, the web butler functionality may be implemented as a stand-alone software application, a web browser plug-in, or a java applet without detracting from the scope of the invention described above.

## Claims

1. A computer-implemented method of performing data mining on an individual basis comprising:
monitoring an individual's use patterns;
creating an individual profile data based on said monitoring; and
performing tasks automatically in accordance with an individual's request and based on the individual profile data .

2. A method as claimed in claim 1, wherein the request includes at least one of grocery shopping, travel planning, and financial transactions.

3. A method as claimed in claim 1, wherein the individual's use patterns include the individual's web use.

4. A method as claimed in claim 1, wherein the individual profile data includes at least one of shopping preferences, browsing preferences, financial preferences, and travel preferences.

5. A method as claimed in claim 1, wherein the monitoring and creating steps are performed on an individual's computer.

6. A computer system for performing data mining on an individual basis comprising:
a processor for receiving and transmitting data; and
a memory coupled to said processor, said memory having stored therein a sequences of instructions which, when executed by one of said one or more processors, cause one of said processor to monitor an individual's use patterns; create an individual profile data based on said monitoring; and perform tasks automatically in accordance with an individual's request and based on the individual data profile.
